Europäisches Patentamt

European Patent Office

Office européen des brevets

(11) Publication number: **0 079 204**
**B1**

# EUROPEAN PATENT SPECIFICATION

(45) Date of publication of patent specification: **28.01.87**

(51) Int. Cl.⁴: **H 04 L 25/03**

(21) Application number: **82305871.4**

(22) Date of filing: **04.11.82**

(54) **Equalizer circuit for use in communication unit.**

(30) Priority: **05.11.81 JP 178551/81**
**05.11.81 JP 178552/81**
**05.11.81 JP 178567/81**

(43) Date of publication of application:
**18.05.83 Bulletin 83/20**

(45) Publication of the grant of the patent:
**28.01.87 Bulletin 87/05**

(84) Designated Contracting States:
**DE FR GB**

(56) References cited:
**DE-A-2 512 752**
**DE-B-1 085 922**
**US-A-3 372 350**
**US-A-4 064 422**

**ABSTRACT OF NEW TECHNOLOGY, August
1977, NTN-77/1036, US Air Force Systems
Command; "Adjustable filter/equalizer with
power series in frequency transfer function".**

(73) Proprietor: **MITSUBISHI DENKI KABUSHIKI
KAISHA**
**2-3, Marunouchi 2-chome Chiyoda-ku
Tokyo 100-(JP)**

(72) Inventor: **Saito, Kazuo**
**1-5-916, Toyosato 2-chome Higashiyodogawa-
ku**
**Osaka-shi Osaka-fu (JP)**

(74) Representative: **Wright, Peter David John et al
R.G.C. Jenkins & Co. 12-15, Fetter Lane
London EC4A 1PL (GB)**

(56) References cited:

**BELL SYSTEMS TECHNICAL JOURNAL, vol. 48,
July/August 1969, pages 1865-1883, New York
(USA); H.R. RUDIN: "A continuosly adaptive
equalizer for general-purpose communication
channels"**

Courier Press, Leamington Spa. England.

# 0 079 204

## Description

The present invention relates to an equalizer circuit for use in a communication unit. More particularly, the present invention relates to an equalizer circuit for use in a TDMA communication system, for example, and for equalizing an amplitude distortion and/or group delay distortion caused in a transmit-receive system, as defined in the pre-characterizing part of either claim 1 or claim 15.

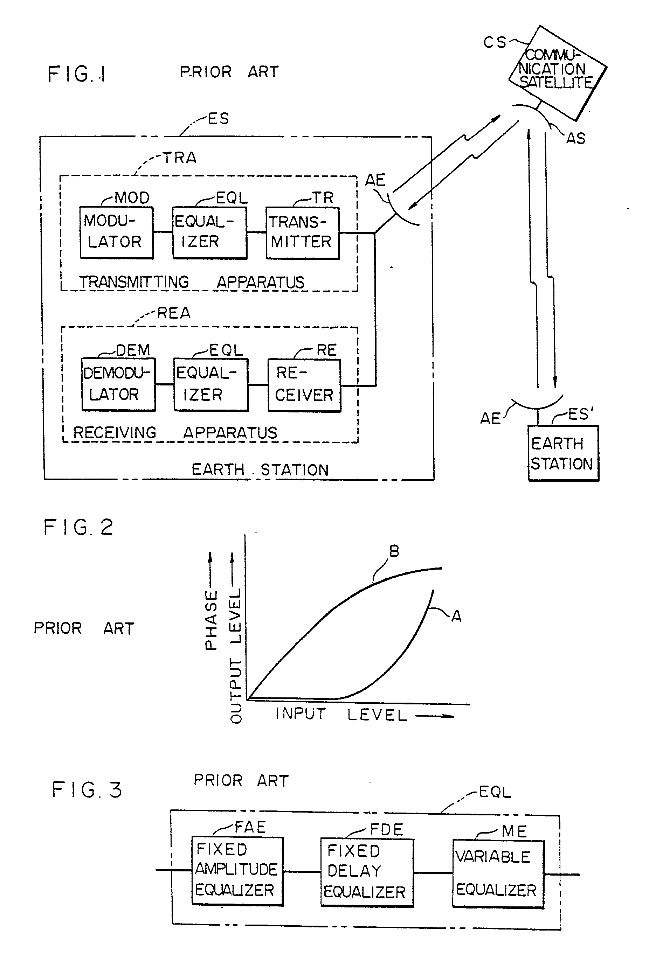

Fig. 1 is a conceptual drawing showing an example of a TDMA communication system which is the background to the present invention. The TDMA communication system is used for a satellite communication system, for example, which comprises a plurality of earth stations ES, ES', . . ., and a common communication satellite CS. The earth station ES comprises a transmitting apparatus TRA and a receiving apparatus REA. A signal modulated by a modulator MOD included in the transmitting apparatus TRA is sent through an equalizer EQL and a transmitter TR to an antenna AE and is then transmitted to an antenna AS of the communication satellite CS. The signal is frequency converted and the frequency converted signal is sent to other earth station ES'. Similarly, a signal from other earth station ES' is received by the antenna AE of the earth station ES through the communication satellite CS and the received signal is provided to the receiving apparatus REA. In the receiving apparatus REA, the received signal passes through a receiver RE and an equalizer EQL and is demodulated by a demodulator DEM. It is known that the transmitter TR and the receiver RE in the earth station ES and a receiving and transmitting system in the communication satellite cause amplitude distortion and/or group delay distortion, respectively. Particularly, a high power amplifier (not shown) included in the communication satellite CS is used in a relatively saturated state due to size, price and stability thereof. As a result, an AM—PM conversion is caused in the high power amplifier, which causes a phase variation as shown in line A in Fig. 2, in which the line B denotes the output level. Such a phase variation becomes a group delay distortion.

The amplitude distortion and group delay distortion are, respectively, equalized by the amplitude frequency response and group delay frequency response of the equalizer EQL included in the transmitting apparatus TRA and the equalizer EQL included in the receiving apparatus REA.

Conventionally, such an equalizer EQL is generally structured to include a fixed amplitude equalizer FAE, a fixed group delay equalizer FDE and a variable equalizer ME, as shown in Fig. 3. Either of the fixed amplitude equalizer FAE and the fixed group delay equalizer FDE or both of them may be omitted depending on the amount of the actual amplitude distortion or group delay distortion.

In this TDMA communication system which is the background to the present invention as claimed in claim 1 or 15, it is impossible that to detect the above described amplitude frequency response and group delay frequency response, once an operation is initiated, by transmitting and receiving test signals so that the optimum amount of equalization is detected. The reason is that the time period when a single earth station occupies a line is extremely short since such communication system is made in a time divisional manner. Therefore, when a new earth station joins such a communication satellite system, it is necessary to seek an optimum point where the amplitude distortion and group delay distortion are minimum and thus the bit error rate (BER) is minimum. To this end, a variable equalizer ME as shown in Fig. 3 may be used.

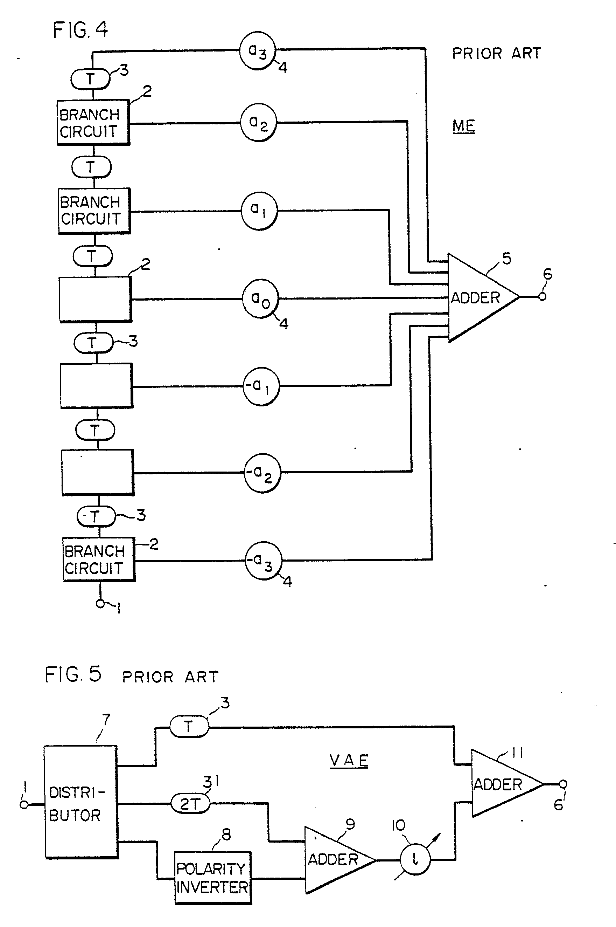

Fig. 4 is a circuit diagram showing an example of a conventional variable equalizer which forms a part of the background to the present invention. An input signal input to an input terminal 1 branches through a branch circuit 2. One branch of the input signal is applied to an attenuation setting circuit 4 having a coefficient $-a_n$ and the remaining signal is input to the next branch circuit 2 through a delay line 3 having a delay amount T. In a similar manner, the respective branched signals from a succession of branch circuits 2 are applied to respective attenuation setting circuits having respective attenuation amounts. The signals from the attenuation setting circuits 4, 4, . . ., are all applied to an adder 5 and the resultant signal is output from the adder 5 to an output terminal 6. The attenuation setting circuits, 4, 4, . . ., include some with reverse polarity. They are arranged in such a way that the attenuation amounts of the attenuation setting circuits 4, 4, . . ., are set to be $a_0=1$ at the center, $+a_1$ and $-a_1$ are one on each side thereof, which have equal absolute values but opposite polarities, $+a_2$ and $-a_2$, . . ., $+a_n$ and $-a_n$. In this way, the amplitude frequency response and group delay frequency response are set through a known transversal filter theory by arbitrarily setting the respective attenuation amounts of the attenuation setting circuits 4, 4, . . .. More particularly, an optimum point is sought for the variable equalizer ME by varying the amplitude frequency response and group delay frequency response while detecting the bit error rate (BER). Such a transversal filter is described in a book entitled "Data Transmission", by William R. Bennett and James R. Davey, published by McGraw-Hill Book Co., 1965, for example.

In the TDMA communication system, the bit error rate is more greatly affected by the group delay distortion than by the amplitude distortion and thus an operation for seeking such an optimum point is easily made if an optimum equalization amount for the group delay distortion can be set. Nevertheless, a conventional variable equalizer has not been able to vary, for example, only the amplitude or only the group delay since the attenuation amounts of the attenuation setting circuits 4, 4, . . ., are arbitrarily set. Accordingly, this means that it is difficult to seek an optimum point with a conventional variable equalizer in a TDMA communication system in which the influence of the group delay frequency response is greater than that of the amplitude frequency response. In addition, although the attenuation amounts of a conventional variable equalizer determine the amplitude frequency response and group delay frequency response, respectively, the amount by which these frequency response characteristics vary when a single

2

attenuation amount varies could not be known without a large amount of simulation data since such variation differs depending on other coefficients. For this reason, it cannot easily be confirmed how the amplitude and group delay are equalized.

Another variable equalizer as shown in Figure 5 has been already proposed by the present applicant, for example. In Figure 5, an input signal applied from an input terminal 1 is distributed by a distributor 7. The signal distributor 7 divides a signal into three signals of the same level. A delay line 3 having a delay amount T is interposed in one path for one of the three signals, a delay line 31 having a delay amount 2T is interposed in another path, and a polarity inverter 8 is interposed in the remaining path. The polarity inverter 8 is structured by a known transformer or transistor and the like and shifts the phase of an applied signal by 180°. The signal from the delay line 31 and the signal from the polarity inverter 8 are combined by an adder 9 and then applied to a variable attenuation setting circuit 10. The variable attenuation setting circuit 10 has a reverse polarity output. The output signal therefrom is combined with the output signal from the delay line 3 by an adder 11.

Let it be assumed that no attenuation of signal is caused except by the variable attenuation setting circuit 10 and no time delay is caused except by the delay lines 3 and 31 and the delay of the first signal (through delay line 3) is used as a reference (zero). The output signal $B(\omega)$ obtained from the output terminal 6 is represented in the following equation (1).

$$B(\omega)=\cos \omega t-I\cos \omega(t+T)+I\cos \omega(t-T)$$
$$=\sqrt{(1+2I^2)-2I^2 \cos 2 \omega T}$$
$$\times \cos\{\omega t-\pi/2+\tan^{-1} (\frac{1}{2I\sin \omega T})\} \tag{1}$$

The response characteristic $G_B(\omega)$ of the amplitude with respect to the frequency of the output signal $B(\omega)$ and the response characteristic $\tau_B(\omega)$ of the delay amount with respect to the frequency of the output signal $B(\omega)$ are provided the following equatinos (2) and (3), respectively.

$$G_B(\omega)=20 \log \sqrt{(1+2I^2)-2I^2 \cos 2 \omega T} \tag{2}$$

$$\tau_B(\omega)=-2IT\frac{\cos \omega T}{(1+2I^2)-2I^2 \cos 2\omega T} \tag{3}$$

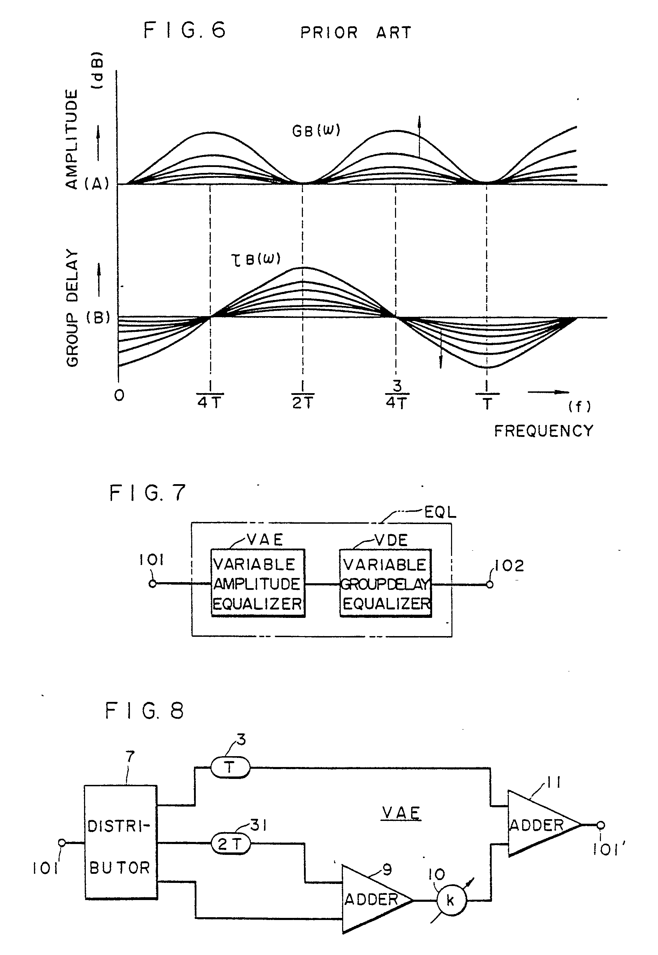

In the equations, $\omega$ is the angular frequency, $\omega=2\pi f$ wherein f is the frequency. Variation with frequency of the amplitude frequency response characteristic $G_B(\omega)$ and the group delay frequency response characteristic $\tau_B(\omega)$ where the coefficient I is larger than 0 (I>0), are shown in the Fig. 6. Fig. 6(A) shows the amplitude frequency response and Fig. 6(B) shows the group delay frequency response, wherein the amplitude and delay amount varies in the direction of the arrow when the coefficient I is increased. More particularly, as shown in Fig. 6, in the Fig. 5 example, the delay amount varies if the coefficient I is varied in the attenuation setting circuit 10. However, even in the Fig. 5 example, the amplitude as well as the delay amount varies with variation of the coefficient I and thus it is extremely difficult to utilize the Fig. 5 example as a variable equalizer in the TDMA communication system.

Accordingly, a principal object of the present invention is to provide a variable group delay equalizer in which the variation in the amplitude when the delay amount is changed is very small, so that the equalizer can be effectively utilized in a TDMA communication system.

The Abstract of New Technology NTN-77/1036 issued by the US Air Force Systems Command discloses an adjustable filter/equalizer, of which it is said that there can be separate adjustment of amplitude distortion and group delay. In the circuit of this filter a signal input is divided into several signals, some of which are passed through one or both of two equal delay circuits. Thus, relative to a signal which passes through one delay circuit but not the other (hereinafter the main signal), a signal which passes through both delay circuits has a lag of the delay period T and a signal which passes through neither of the delay circuits has a lead of T. Two pairs of signals are provided, each pair having a signal of lag T and a signal of lead T. The signals of each pair are combined, in one case with identical phase and in the other case with the signal of lead T inverted. Each combined signal is individually weighted and then combined with each other and the main signal and finally given a common weighting. Additionally, the combined signal from the combination in the same phase is combined with an inverted signal divided from the main signal before it is individually weighted, but after having been halved in amplitude. The output signal from the filter is described by the following equation:

$$D(\omega)=W_1[(1-W_3) \cos \omega t+W_2 \cos \omega(t-T)-W_2 \cos \omega(t+T)+\tfrac{1}{2} W_3 \cos (t-T)+\tfrac{1}{2} W_3 \cos(t+T)]$$
$$=W_1\sqrt{1+4W_2^2-2W_3+W_3^2+2W_3(1-W_3)\cos \omega T+(W_3^2-4W_2^2)\cos^2\omega t}$$
$$\times \sin \{\omega t+\tan^{-1}\frac{1-W_3+W_3\cos \omega t}{2W_2 \sin \omega t}\}$$

3

In the Abstract of New Technology filter, the amount of the time lead and lag is the same for both the pairs of signals. It appears that the weights $W_1$, $W_2$ and $W_3$ are to be individually and independently variable, since it appears (from the approximate transfer function given in the Abstract; $W(\omega)\tau W_1[1+W_2\omega+W_3\omega^2]$) that one will be used essentially to vary the amplitude distortion while another will be used essentially to vary the group delay and the third has overall effect. It should also be noted that the weights are complex quantities, including in-phase and quadrature components.

According to the present invention there is provided a variable group delay equalizer in which a signal input is distributed into at least a main signal and first to fourth signals which are eventually recombined in an output signal, the said signals being subject to a pattern of delays whereby, relative to the absolute delay applied to the main signal, the first and second signals have respectively a time lead and a time lag of a first predetermined time period and the third and fourth signals have respectively a time lead and a time lag of a second predetermined time period, when recombined in the output signal, the equaliser having:

a first signal combining means for combining the said first and second signals;

a correction signal producing means for combining the said second and third signals and using the combination to output a correction signal;

a second signal combining means for combining the main signal, the correction signal and the output from the first signal combining means;

signal amplitude altering means for altering the amplitude of the first to fourth signals, the amplitude of the first and second signals being the same as each other in the recombined output signal and the amplitude of the third and fourth signals being the same as each other in the recombined output signal; and

a first polarity inversion means whereby the phase of first and second signals are inverted with respect to each other in the recombined output signal, characterized in that the first predetermined time period and the second predetermined time period are different, the said signal amplitude altering means is variable so that the amplitudes of the first to fourth signals may be varied provided that a constant ratio is maintained between the log of the amplitude of output of the first signal combining means and the log of the amplitude of the said correction signal, and the equalizer having a second polarity inverting means whereby the polarity of a partially recombined signal comprising the first and second signals may be inverted.

The correction signal can reduce the amplitude distortion which would otherwise be present, and thus a variable group delay equalizer which is capable of varying a group delay frequency response without varying an amplitude frequency response can be obtained. If a plurality of variable signal attenuation means are adapted to be ganged with each other, it is easy to adjust such delay amounts. As seen in an embodiment, if similar variable signal attenuation means are ganged with each other, a variable group delay equalizer with a very simple circuit structure, but with a very high accuracy can be obtained at low cost.

A preferred embodiment of the present invention is directed to an equalizer circuit for use in a transmitting apparatus and/or a receiving apparatus to an amplitude distortion and group delay distortion caused in a transmit/receive system, and which further comprises

a variable amplitude equalizer (VAE) being able to vary an amplitude frequency response characteristic in a continuous manner without substantially varying a group delay frequency characteristic, and

a variable group delay equalizer (VDE) connected to said variable amplitude equalizer (VAE) in a cascade manner and being able to vary the group delay frequency characteristic in a continuous manner without substantially varying the amplitude frequency response characteristic.

In accordance with this embodiment, amplitude distortion and group delay distortion can be equalized independently and continuously and thus the group delay distortions which principally affect the bit error rate in a TDMA communication system, for example, can easily be equalized. In addition, since the amplitude frequency response and group delay frequency response can be independently adjusted, it can easily be confirmed in what conditions the amplitude distortion and group delay distortion are equalized and thus reproducible data can easily be obtained without a large number of simulations.

In another aspect, the present invention provides an equalizer comprising:

a signal inputting portion,

signal distributor means for distributing an input signal applied to said signal inputting portion into a predetermined plurality of signals,

a plurality of branch signal line means receiving on the respective input sides a signal distributed by said signal distributor means, delay means interposed in at least one of said branch signal line means and having a predetermined delay time,

attenuation setting circuit means interposed in at least one of said branch signal line means and having a predetermined attenuation coefficient, and

adder means for adding a signal obtained on the respective output side of said branch signal line means, characterised in that the said signal distributor means comprises a hierarchieal arrangements of signal dividers, and at least some of the said plurality of signals being in pairs which are provided by the outputs of signal dividers each being common to a respective said pair.

Embodiments of the present invention, given by way of non-limitative example, will now be described with reference to the accompanying drawings, in which:

4

Fig. 1 shows a concept of a TDMA communication system which is a background of the present invention;

Fig. 2 is a graph showing a characteristic of a high power amplifier included in a communication satellite;

Fig. 3 is a block diagram showing an example of a prior art equalizer for use in a TDMA communication system;

Fig. 4 is a circuit diagram showing an example of a conventional variable equalizer;

Fig. 5 is a circuit diagram showing another example of a conventional variable equalizer;

Fig. 6 is a graph of frequency response characteristics of the amplitude and group delay in the example of Fig. 5;

Fig. 7 is a block diagram showing an example of an equalizer for use in a TDMA communication system in accordance with an embodiment of the present invention;

Fig. 8 is a circuit diagram showing an example of a variable amplitude equalizer;

Fig. 9 is a graph showing a frequency response characteristic of the amplitude of the Fig. 8 embodiment;

Fig. 10 is a circuit diagram showing an example of a variable attenuation setting circuit (variable signal attenuation means);

Fig. 11 is a graph explaining the operation of the Fig. 10 embodiment;

Fig. 12 is a circuit diagram showing a variable group delay equalizer embodying the present invention;

Fig. 13 is a graph showing the respective frequency response characteristics of the amplitude and group delay of the Fig. 12 embodiment;

Fig. 14 is another graph showing a frequency response characteristic of the group delay;

Fig. 15 is a circuit showing another embodiment of the present invention;

Fig. 16 is a circuit showing a further embodiment of the present invention;

Fig. 17 is a circuit diagram showing a still further embodiment of the present invention;

Fig. 18 is a circuit diagram showing a group delay equalizer embodying the present invention;

Fig. 19 is a circuit diagram showing another group delay equalizer embodying the present invention; and

Fig. 20 is a circuit diagram showing an amplitude equalizer embodying the present invention.

Fig. 7 is a block diagram showing an equalizer circuit embodying the present invention for use in a TDMA communication system. In Fig. 7, a signal from an input terminal 101 is applied to an output terminal 102 through a variable amplitude equalizer VAE and a variable group delay equalizer VDE which are included in an equalizer circuit EQL. If and when the equalizer EQL is used, for example, in a TDMA communication system as shown in Fig. 1, the input terminal 101 is connected to a modulator and the output terminal 102 is connected to a transmitter when the equalizer EQL is to be included in a transmitting system, and the input terminal 101 is connected to a receiver and the output terminal 102 is connected to a demodulator when the equalizer EQL is included in a receiving system. The variable amplitude equalizer VAE can vary the amplitude frequency response only, without varying the group delay frequency response, and the variable group delay equalizer VDE can vary the group delay frequency response only, without varying the amplitude frequency response. Thus, by connecting two equalizers VAE and VDE in a cascade manner, optimum equalization of the amplitude and group delay becomes possible in an independent manner. Since the use of such an equalizer EQL enables respective equalization of the amplitude distortion and the group delay distortion in the system independently, it can be known how respective distortions are equalized.

As a matter of course, in the Fig. 7 embodiment, a fixed equalizer may also be used as necessary.

Fig. 8 is a circuit diagram showing one example of a variable amplitude equalizer. The Fig. 8 embodiment is largely the same as the Fig. 5 arrangement except that a polarity inverter is omitted as compared with the variable equalizer as shown in Fig. 5. More particularly, an input signal from an input terminal 101 is distributed by a distributor 7. A signal which passes through a delay line 31 is combined with a signal which does not pass through the delay line by an adder 9 and the thus combined signal is applied to an adder 11 through a variable attenuation setting circuit 10 having an attenuation amount or coefficient k. In such a way, the adder 11 combines a main signal passing through the delay line 3 and a subsignal passing through a variable attenuation setting circuit 10 and outputs the combined signal to an output terminal 101′.

Let it be assumed that no attenuation of signals is caused in all elements other than the attenuation setting circuit 10 and no time delay is caused in elements other than delay lines 3 and 31 and the delay of the main signal is used as a reference which is set to zero. The output signal $A(\omega)$ withdrawn at the output terminal 101′ is given in the following equation (4).

$$A(\omega)=\cos \omega t+k\cos \omega(t+T)+k\cos \omega(t-T)$$
$$=(1+2\ k\cos\omega T)\ \cos\omega t \qquad (4)$$

Accordingly, the frequency characteristic $G_A(\omega)$ of the amplitude of the output signal $A(\omega)$ is given in the following equation (5).

$$G_A(\omega)=20\ \log\ (1+2\ k\cos\ \omega t) \qquad (5)$$

5

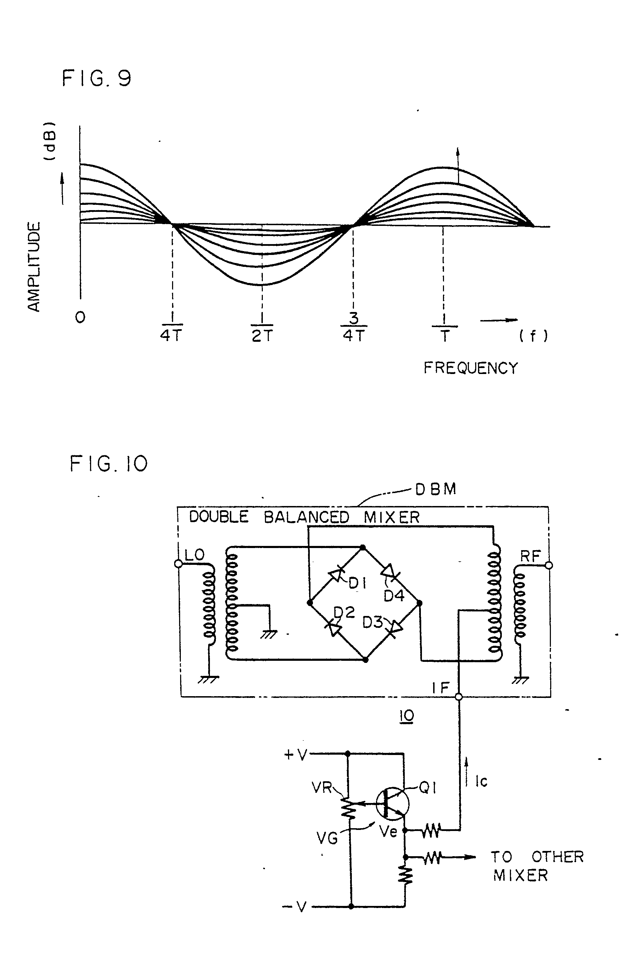

However, the group delay frequency response characteristic $\tau_A(\omega)$ is flat. The variation of the amplitude frequency response characteristic $G_A(\omega)$ with the coefficient k is shown in Fig. 9. If the coefficient k is made larger, the amplitude varies in the direction of the arrow. More particularly, in the Fig. 8 embodiment, a variable amplitude equalizer VAE can be obtained which is capable of varying the amplitude frequency response without varying the group delay frequency response, by varying the coefficient k of the variable attenuation setting circuit 10.

Fig. 10 is a circuit diagram showing an example of a variable attenuation setting circuit. A variable attenuation setting circuit 10 includes a double balanced mixer DBM and a voltage generator VG for applying a control voltage thereto. The double balanced mixer DBM includes an input terminal LO, an output terminal RF and a control terminal IF. The double balanced mixer DBM comprises a transformer connected to the input terminal LO and a transformer connected to the output terminal RF, and four diodes D1 to D4 connected in a bridge manner between the two transformers. The control voltage generator VG comprises a variable resistor VR and a transistor Q1 to the base of which is applied a voltage from the variable resistor VR. The collector of the transistor Q1 and one end of the variable resistor VR are connected to a power supply +V and the emitter of the transistor Q1 and the other end of the variable resistor VR are connected to a power supply −V. The value of the resistance of the variable resistance VR is changed so that the control current Ic flows from the emitter of the transistor Q1 towards the control terminal IF. An output signal from the adder 9, for example, is applied to the input terminal LO of the double balanced mixer DBM and the output terminal RF is connected to an input of the adder 11.

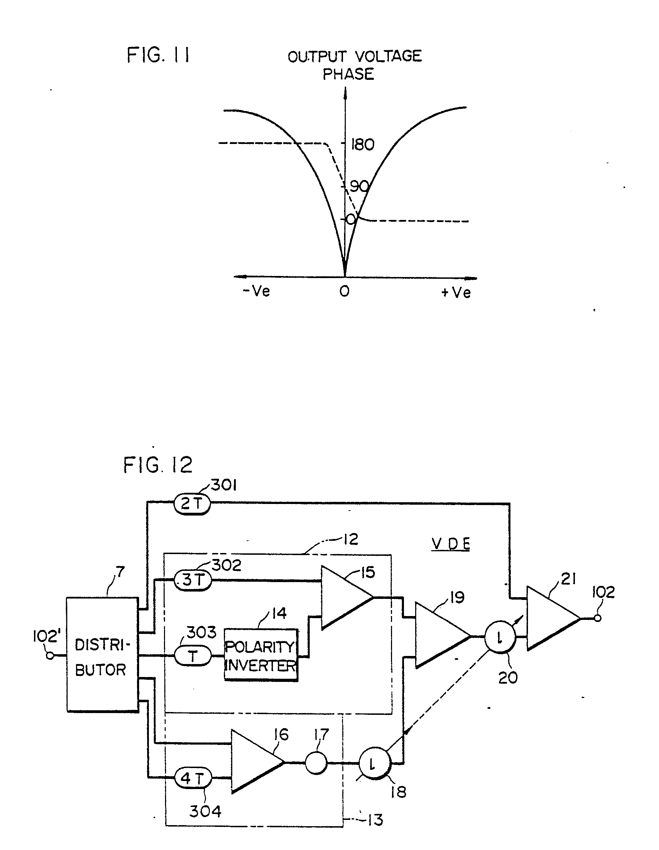

Next, referring to Fig. 11, an operation of the variable attenuation setting circuit as shown in Fig. 10 will be described. An emitter voltage Ve of the transistor Q1 is set within the range from +Ve to −Ve by adjusting the variable resistor VR. The voltage Ve causes a control current Ic to flow into the double balanced mixer DBM through the terminal IF, the direction of the current Ic depending on the polarity of the voltage Ve. If and when the polarity of the voltage Ve is plus, the diodes D1 and D3 become conductive and the diodes D2 and D4 are cutoff. Reversely, if and when the polarity of the voltage Ve is minus, the diodes D2 and D4 become conductive and the diodes D1 and D3 are cutoff. If and when the voltage Ve is OV, all of the diodes D1 to D4 are cutoff. Accordingly, as the voltage Ve varies between +ve and −ve, the polarity of the signal is inverted and thus an output is withdrawn from an output terminal RF. The value of the resistance of the diodes D1 to D4 changes depending on the current Ic and thus, as shown in Fig. 11, the amplitude of the output voltage changes according to the change of the voltage Ve. Thus, it should be understood that the variable attenuation setting circuit as shown in Fig. 10 can invert the polarity of a signal passing therethrough as well as vary the amplitude thereof.

Fig. 12 is a circuit diagram showing an example of a variable group delay equalizer embodying the present invention. The variable group delay equalizer VDE comprises an input terminal 102' and an output terminal 102, the input terminal 102' being connected to, for example, an output terminal 101' as shown in Fig. 8. The output terminal 102 is connected to, for example, the transmitter TR or the demodulator DEM (Fig. 1). The input terminal 102' is connected to a distributor 7 and thus an input signal is distributed by the distributor 7 into the necessary number of signals (in this embodiment, the number is 5). Two of these five signals are applied to a delay circuit 12 and another two signals are applied to a correcting circuit 13. The remaining signal is applied to an adder 21 through a delay line 301 having a delay amount 2T. The two signals applied to the delay circuit 12 are delayed, respectively, by the delay lines 302 and 303 having delay amounts 3T and T, respectively, so that a signal of time lead of T and a signal of time delay of T are obtained with respect to the reference which is the absolute delay amount (2T, in this example) of a main signal circuit, that is, the delay line 301, the output signal from the delay line 302 is a signal of time delay T with respect to the main signal and the output signal from the delay line 303 is a signal of time lead T with respect to the main signal. The output signal from the delay line 303 is applied to an adder 15 through a known polarity inverter 14, together with the output signal from the delay line 302. Thus, in the delay circuit 12, signals of a predetermined time lead T and time delay T with respect to the reference of the absolute delay amount of the main signal, are combined at the same level but different polarity and the synthesized signal is applied to an adder 19. On the other hand, one of two signals from the distributor 7 to the correcting circuit 13 is directly applied to an adder 16 and the other is applied to the adder 16 through a delay line 304 having a delay amount 4T. Accordingly, in the correcting circuit 13, signals of a predetermined time lead 2T and time delay 2T with respect to the reference of the absolute delay amount of the main signal, are combined at the same level by the adder 16. An output signal from the adder 16 is applied to a variable attenuation setting circuit 18 through a known fixed attenuator 17. The variable attenuating setting circuit 18 has an attenuation amount or coefficient l, an output signal from the circuit 18 being applied to the adder 19. Thus, the adder 19 combines the output signal from the delay circuit 12 and the output signal from the correcting circuit 13 and applies the combined output to the adder 21 of the final stage through a variable attenuation setting circuit 20. The variable attenuation setting circuit 20 is ganged with the above described variable attenuation setting circuit 18. More specifically, these variable attenuation setting circuits 18 and 20 each comprise a double balanced mixer as shown in Fig. 10 and are controlled by the same voltage Ve from the voltage generator VG (Fig. 10). Therefore, in this embodiment, it is possible to vary the coefficients l of two attenuation setting circuits 18 and 20 in a ganged manner simply by varying the resistance of the variable resistor VR (Fig. 10).

The main signal circuit and the amplitude correcting circuit 13 are the same as in the variable amplitude equalizer VAE as shown in Fig. 8 and, assuming that the delay circuit 12 is not provided, only the amplitude frequency response varies, without variation of the group delay frequency response, when the coefficient I of the variable attenuation setting circuit 18 is varied. The period of repetition of amplitude variation in the correcting circuit 13 is 1/2T. On the other hand, assuming that the correcting circuit 13 is not provided, the main signal circuit and the delay circuit have a period of repetition of amplitude variation of 1/2T. Thus, in the Fig. 12 embodiment, the period of the repetition of amplitude frequency response of the correcting circuit 13 and that in the delay circuit 12 are the same so that the amplitude variation in the delay circuit 12 can be cancelled by the output signal from the correcting circuit 13, which results in an extremely small amplitude variation.

Assuming that no attenuation of signal is caused in all elements other than the variable attenuation setting circuits 18 and 20 and the fixed attenuator 17 and no time delay is caused in all elements other than the respective delay lines and assuming the coefficient of the variable attenuation setting circuit 20 is I, and the coefficients of circuits including the fixed attenuator 17 and the variable attenuation setting circuits 18 and 20 are k, then a signal $C(\omega)$ obtained from the output terminal 102 is given in the following equation (6).

$$C(\omega)=\cos\ \omega t-I\cos\ \omega(t+T)+I\cos\ \omega(t-T)+k\cos\ \omega(t-2T)+k\cos\ \omega(t+2T)$$
$$=\sqrt{(1+2I^2)+2(2k-I^2)\ \cos\ 2\omega T+4k^2\ \cos^2\ 2\omega T}$$

$$\times\sin\left\{\omega t+\tan^{-1}\cdot\frac{(1+2k\ \cos\ 2\omega T)}{2I\sin\ \omega T}\right\} \tag{6}$$

As a result, an amplitude frequency response characteristic $Gc(\omega)$ of the output signal $C(\omega)$ is given in the following equation (7).

$$Gc(\omega)=20\ \log\sqrt{(1+2I^2)+2(2k-I^2)\ \cos\ 2\omega t+4k^2\cos^2\ 2\omega T} \tag{7}$$

The variable attenuation setting circuits 18 and 20 are ganged with each other and have the same coefficient I. Let it be assumed that the fixed attenuator 17 has an attenuator amount 6 dB, that is, the coefficient 0.5, the whole coefficient k is given in the following equation (8).

$$k=0.5\times I\times I=I^2/2 \tag{8}$$

Substituting the above described equation (8) in equation (7), the second term within the root sign becomes 0 and thus the above described equation (7) becomes the following equation (9).

$$Gc(\omega)=20\ \log\ \sqrt{(1+2I^2)+I^4\ \cos^2\ 2\omega T} \tag{9}$$

Comparing the above described equation (9) with the previous equation (2), the term in which the amplitude varies with respect to a frequency is $2I^2\ \cos\ 2\omega T$ in the equation (2) whereas it is $I^4\ \cos^2\ 2\omega T$ in the equation (9), which becomes very small if the coefficient $I<1$. On the other hand, the group delay frequency response characteristic $\tau_c(\omega)$ in this case is given in the following equation (10).

$$\tau_c(\omega)=-2TI\frac{I^2\ \sin\ 2\omega T\cdot\sin\ \omega T+(I^2+1)\ \cos\omega T}{1+2I^2+I^4\ \cos^2\ 2\omega T} \tag{10}$$

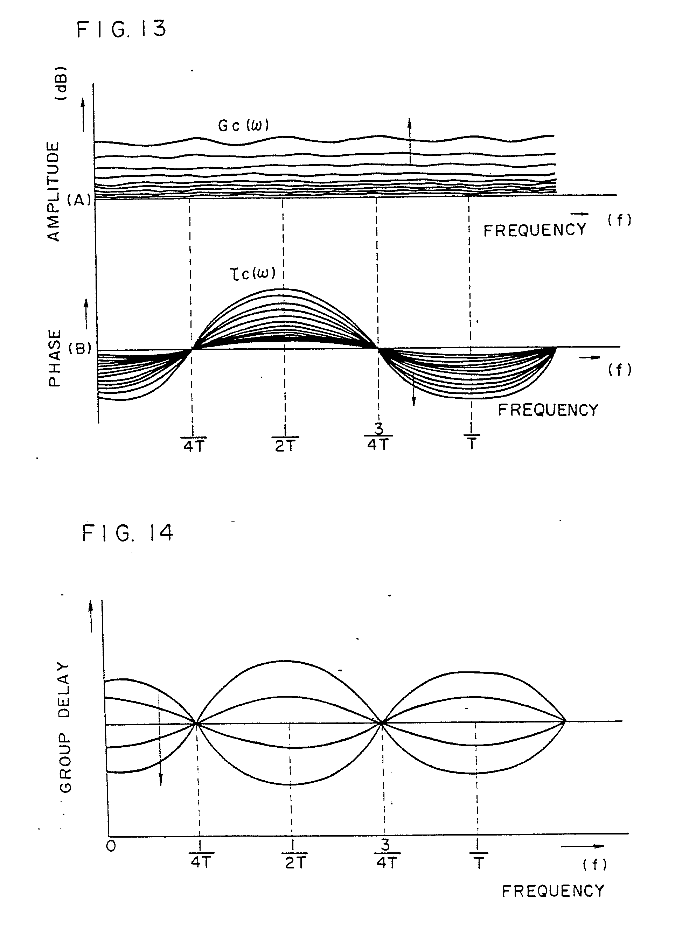

The variation characteristics with respect to the coefficient I of the amplitude frequency response characteristic $Gc(\omega)$ and the group delay frequency response characteristic $\tau_c(\omega)$ are shown in Fig. 13. Fig. 13(A) indicates the amplitude frequency response characteristic and Fig. 13(B) indicates the group delay frequency response characteristic. In Fig. 13, if the coefficient I of both variable attenuation setting circuits 18 and 20 are made larger, the amplitude and the delay amount vary, respectively, in the direction of the arrow. It can be seen from Fig. 13 that the group delay frequency response can be varied by varying the coefficient I while the variation of amplitude with frequency remains very small irrespective of variation of the coefficient I.

Although we assumed that no attenuation of signal is caused in all elements other than the variable attenuation setting circuit and the fixed attenuator, the above described equation (9) is established irrespective of the absolute amount of attenuation. Also, the equation (10) is established irrespective of the absolute time delay.

The graph of Fig. 13 shows the amplitude variation and a delay amount variation when the coefficient $I>0$. If the coefficient $I<0$, the sign of the above described equation (10) is reversed and thus the lead and the lag of the delay amount with respect to the reference are reversed. However, the above described equation (9) is not reversed if the absolute value of the coefficient I is maintained even if the coefficient $I<0$. More particularly, if and when the coefficient changes from plus to minus, the delay amount reverses and

7

changes as shown in Fig. 14, but the amplitude simply repeats the variation shown in Fig. 13(A). Thus it will be understood that the Fig. 12 embodiment can vary the group delay frequency response only, without any amplitude variation. Accordingly if such a variable group delay equalizer VDE is employed as a variable equalizer in a TDMA communication system, deterioration of a bit error rate due to group delay distortions only can be equalized independently. Thus an operation for seeking an optimum point is readily performed as compared with a conventional case where an amplitude frequency response and a group delay frequency response change together. The respective amounts of equalization for the amplitude distortion and the delay distortion can be ascertained with certainty and thus reproducible data can be obtained, without a number of simulations, by using such a variable group delay equalizer and variable amplitude equalizer.

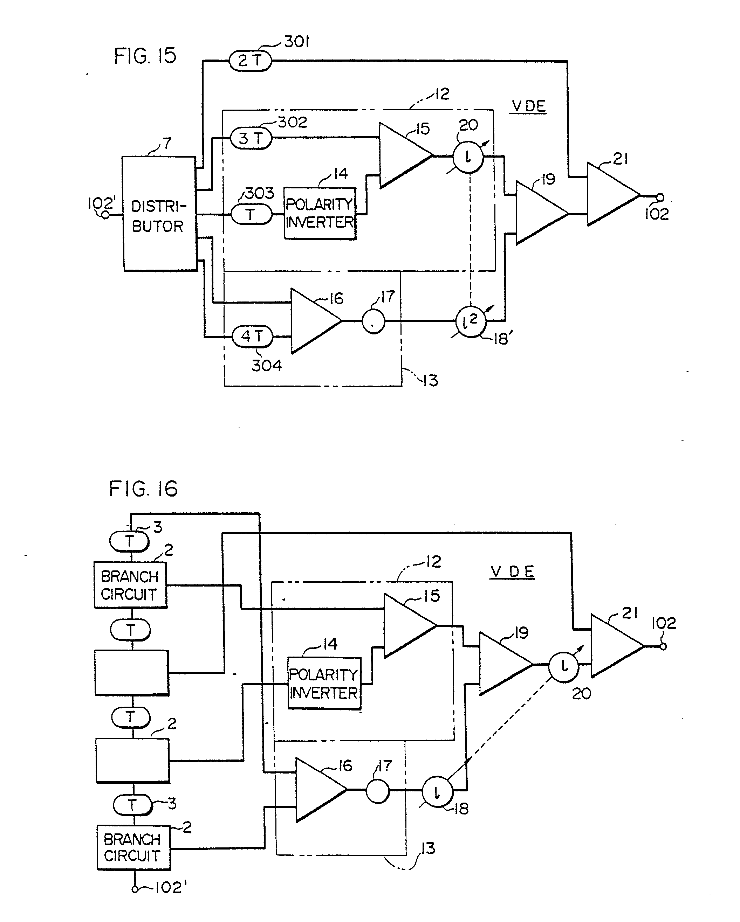

Fig. 15 is a circuit diagram showing another embodiment of the present invention. In Fig. 15, as compared with the Fig. 12 embodiment, the position of the variable attenuation setting circuit 20 is changed and correspondingly, the coefficient of the variable attenuation setting circuit 18' is changed. More particularly, in the Fig. 12 embodiment, the variable attenuation setting circuit 20 is connected as a subsequent stage to the adder 19, but the variable attenuation setting circuit 20 can be interposed between the adders 15 and 19, as shown in Fig. 15, if the coefficient of the variable attenuation setting circuit 18' is squared to become $l^2$. In principle, two variable attenuation setting circuits may be ganged with each other so that the amplitude of the output signal from the correcting circuit 13 is multiplied by the square of the multiplication factor applied to the amplitude of the output signal from the delay circuit 12, that is, it is attenuated by twice as much on a decibel scale.

Fig. 16 is a circuit diagram showing another embodiment of the present invention. The Fig. 16 embodiment is the same as the Fig. 12 embodiment except that a combination of conventional branch circuits and delay lines as shown in Fig. 4 is used as a signal withdrawing means.

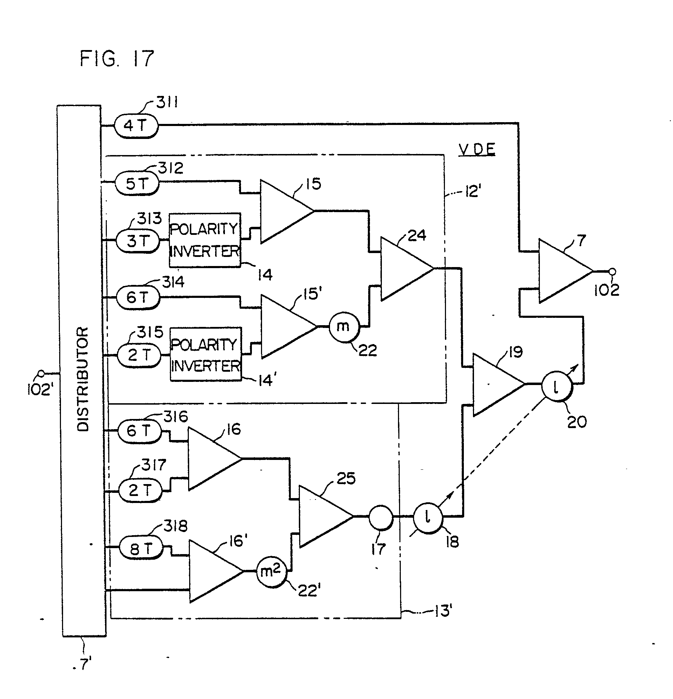

Fig. 17 is a circuit diagram showing a further embodiment of the present invention. The Fig. 17 embodiment is structured such that the delay circuit and the correcting circuit comprise a plurality of sets of signal paths, respectively. More particularly, the delay circuit 12' has adders 15 and 15' which are combined by adder 24, and in a corresponding manner the correcting circuit 13' has adders 16 and 16' which are combined by adder 25. The output signal of the adder 15' is attenuated by a fixed attenuator 22 and the output signal from the adder 16' is attenuated by a fixed attenuator 22'. The fixed attenuators 22 and 22' have coefficients m and $m^2$, respectively. If and when the total delay amount required is to be different from the amount of variable delay applied in the combined output of the delay circuit and the correction circuit, the amplitude variation of a signal passing through the adder 15' is cancelled by an amplitude variation of a signal passing through the adder 16', by setting the coefficients of fixed attenuators 22 and 22' at m and $m^2$, and consequently, the delay amount only of the signal obtained at the output terminal 102 can be changed by varying the coefficients l of the variable attenuation setting circuits 18 and 20 in a ganged manner.

In the above described embodiments, a double balanced mixer is used as one example of a variable attenuation-setting circuit. However, it will be readily understood by those skilled in the art that such a variable attenuation setting circuit can be achieved by other circuit structures.

In the Figs. 12, 15, 16 and 17 embodiments, a 180° phase shifter is used as the polarity inverters 14, 14'. However, a 180° combiner or a 90° distributor may be used as such a polarity inverter. For example, in the Fig. 12 embodiment, if a 180° combiner is substituted for the adder 15 or if a 90° distributor is substituted for the portion of the distributor 7 sending a signal to the delay circuit of the adder 15 and a 90° combiner is substituted for the adder 15, the same result can be obtained. In essence, for example, in the Fig. 12 embodiment, the two signals applied to the adder 15 must ultimately have inverse polarities from each other.

Similarly, separate polarity inverters may be used with the variable attenuation setting circuits 18 (or 18') and 20, which would not themselves reverse the polarity. The circuits 18 (18') and 20 must be ganged with each other so that the respective amplitudes of the output signal from the delay circuit 12 and the output signal from the correcting circuit 13 are attenuated in effect in a constant log ratio, but the position in which they are inserted and the coefficients may be arbitrarily selected as long as this requirement is satisfied. For example, in the Fig. 12 embodiment, variable attenuation setting circuits having a predetermined coefficient or attenuation amount may be ganged with each other and disposed in the respective signal paths provided in the delay circuit 12 and the correcting circuit 13.

Although a TDMA communication system has been described as one example of the use of the variable group delay equalizer, such a variable group delay equalizer can, of course, be used in an FDM communication system and the like.

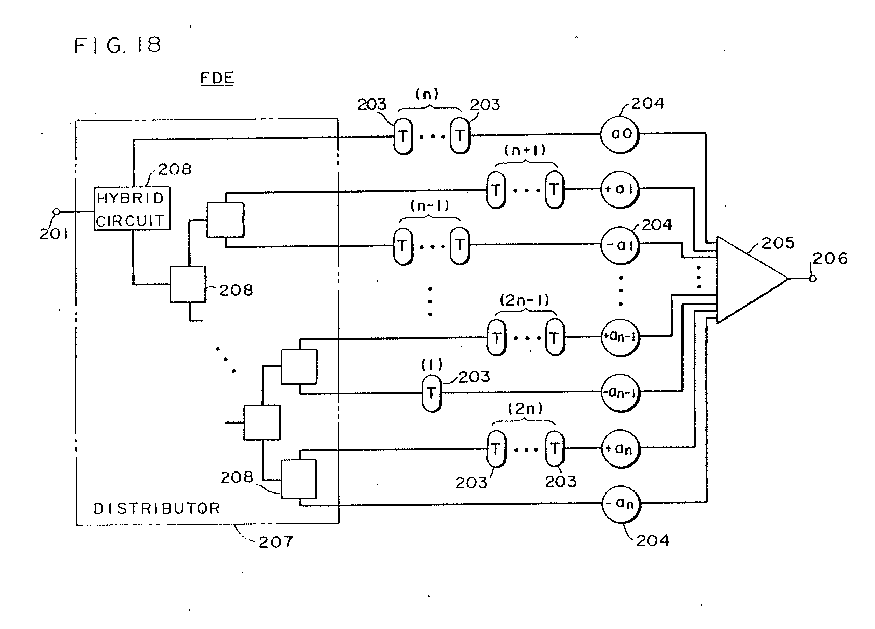

Fig. 18 is a circuit diagram showing a preferred example of a group delay equalizer which can be used in one embodiment of the present invention. In Fig. 18, an input signal input to an input terminal 201 is applied to a distributor 207. The distributor 207 is comprised of a combination of hybrid circuits 208, 208, ..., which divide a signal into two signals at the same signal level. The input signal is applied to the necessary number of signal lines by the distributor 207. 0 to 2n delay lines, each having a delay amount T, respectively are interposed in the respective signals lines. In each signal line, attenuation setting circuits 204, 204, ..., having coefficients $a_0$, $+a_1$ and $-a_1$, ..., $+a_n$ and $-a_n$ are interposed. In the Fig. 18 embodiment, since the distributor 207 has the structure of a stack of hybrid circuits 208, the signals applied to the attenuation setting circuit 204 having a coefficient $+a_1$ and the attenuation setting circuit 204 having

8

a coefficient $-a_1$ can have the same signal level as each other. Similarly, the signals applied to the attenuation setting circuit 204 having a coefficient $+a_n$ and the attenuation setting circuit 204 having the coefficient $-a_n$ can have the same signal level as each other. A circuit having the same characteristic as a known group delay equalizer can be obtained by properly setting coefficients $a_0$ to $a_n$ in the attenuation setting circuits 204, 204, . . ..

More particularly, letting a coefficient $a_1 = l$, an amplitude frequency response characteristic $G(\omega)$ and a group delay frequency response characteristic $\tau(\omega)$ of the output signal obtained at an output terminal 206 are approximated to in the following equations (11) and (12). (The precise equation is a polynomial which takes account of coefficients $a_2$ to $a_n$ and delays of 0 to $(n-2)T$ and $(n+2)T$ to $2T$.

$$G(\omega) = 20 \ \log\sqrt{1+4l^2 \ \sin^2\omega T} \qquad (11)$$

$$\tau(\omega) = -2lT\frac{\cos\omega T}{(1+2l^2)-2l^2 \ \cos\omega T} \qquad (12)$$

If the coefficient $l$ is a small value, $G(\omega) = 1$, which indicates that the frequency characteristic of the amplitude is flat. Accordingly, as is well known, the delay characteristic $\tau(\omega)$ can be changed by varying the coefficient $l$.

The equivalent conventional equalizer as shown in Fig. 4 required a correcting means since the signal levels of the different signals input to the attenuation setting circuit are different.

More particularly, in a very high frequency, an insertion loss is caused in the actual circuit since a distributor, a directional coupler or the like is used as the branch circuit. Accordingly a difference in level results in the signal applied to each attenuation setting circuit, which difference is proportional to the number of the branch circuits which are provided in the path thereto, and thus there is a different signal level between attenuation setting circuits which should have the same signal level. For this reason, conventionally, such a level difference was corrected before the difference in levels reached an adder, for example by using a fixed attenuator or an amplifier. Thus, a conventional apparatus necessarily requires means for correcting a signal level difference caused the insertion loss. Therefore the structure of the circuit of such an equalizer is large and expensive as well as complicated. However, in accordance with the present embodiment, such correcting means can be omitted because the distribution ratio in the distributor 207 can be set adequately. The distributor 207 provides signals having the same signal level to both members of any pair of lines having attenuators $+a_i$ and $-a_i$ and total delays $+T_i$ and $-T_i$ relative to the absolute delay on the $a_0$ line. In addition, in accordance with the present embodiment, the influence of the amplitude frequency characteristic can be greatly reduced. More particularly, in a conventional apparatus in Fig. 4, when the branch circuits 2, 2, . . ., have an amplitude frequency characteristic, a main signal, that is, a signal passing through the attenuation setting circuit having a coefficient $a_0$, comes to have an amplitude frequency characteristic depending on the frequency characteristics of the branch circuits through which the signal passes thereto. On the other hand, the level of the main signal is the largest as compared with the other signals and consequently, such an amplitude frequency characteristic of the branch circuits has a large effect on the frequency response characteristic of an output signal output from the output terminal 6. In contrast to this, in accordance with the Fig. 18 embodiment, there are no cumulative effects of the frequency characteristics of the branch circuits and thus the influence of the branch circuits on the frequency response characteristic of the output signal is greatly reduced.

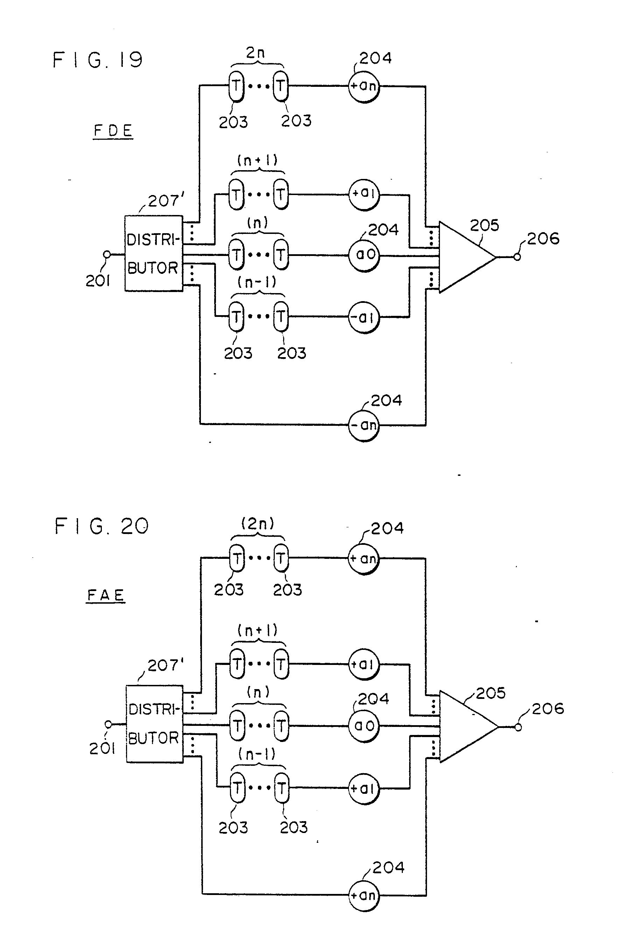

Fig. 19 is a circuit diagram showing another example of a group delay equalizer embodying the present invention. In the Fig. 19 embodiment, a signal distributor 207' divides an applied input signal into signals of the same level. Although a combination of hybrid circuits as shown in Fig. 18 can be used as the distributor 207', other structures may be used. Even in the Fig. 19 embodiment, all of the distributed output levels of the distributor 207' can be made to be the same and thus correcting means which was required in the prior art is not required.

Fig. 20 is a circuit diagram showing an amplitude equalizer as another embodiment of the present invention. Since, as described in the foregoing, an amplitude equalizer is different from a group delay equalizer only in the polarity of some of the signals, the detailed description may be omitted here. Even in the Fig. 20 embodiment, the level correcting means can be eliminated, just as in the Fig. 19 embodiment.

It will be easily understood that in all of the above described embodiments a variable group delay equalizer or a variable amplitude equalizer can be obtained, respectively, by making each attenuation setting circuit variable. As described in the foregoing, a known double balanced mixer is available as such a variable attenuation setting circuit. As described in the foregoing, in accordance with these embodiments of the present invention, means for correcting a difference in levels due to an insertion loss, which was conventionally required, can be omitted, since the signal level to each branch signal line can be arbitrarily set by a signal distributor means.

**Claims**

1. A variable group delay equalizer in which a signal input is distributed into at least a main signal and

9

first to fourth signals which are eventually recombined in an output signal, the said signals being subject to a pattern of delays whereby, relative to the absolute delay applied to the main signal, the first and second signals have respectively a time lead and a time lag of a first predetermined time period and the third and fourth signals have respectively a time lead and a time lag of a second predetermined time period, when recombined in the output signal, the equaliser having:

a first signal combining means (15, 24) for combining the said first and second signals;

a correction signal producing means (13) for combining the said second and third signals and using the combination to output a correction signal;

a second signal combining means (19, 21) for combining the main signal, the correction signal and the output from the first signal combining means;

signal amplitude altering means (18, 20) for altering the amplitude of the first to fourth signals, the amplitude of the first and second signals being the same as each other in the recombined output signal and the amplitude of the third and fourth signals being the same as each other in the recombined output signal; and

a first polarity inversion means (14) whereby the phase of first and second signals are inverted with respect to each other in the recombined output signal, characterized in that the first predetermined time period and the second predetermined time period are different, the said signal amplitude altering means is variable so that the amplitudes of the first to fourth signals may be varied provided that a constant ratio is maintained between the log of the amplitude of output of the first signal combining means and the log of the amplitude of the said correction signal, and the equalizer having a second polarity inverting means whereby the polarity of a partially recombined signal comprising the first and second signals may be inverted.

2. A variable group delay equalizer according to claim 1 in which the correction signal producing means comprises a further signal combining means (16, 25) for combining the third and fourth signals, and fixed attenuator means (17) for attenuating by a predetermined amount an output signal from the said further signal combining means.

3. A variable group delay equalizer according to claim 1 or claim 2 in which the second predetermined time period is two times the first predetermined time period.

4. A variable group delay equalizer according to any one of claims 1 to 3 in which the said signal amplitude altering means acts to alter the amplitude of the said correction signal by the square of the amount by which it acts to alter the output of the first signal combining means.

5. A variable group delay equalizer according to any one of the preceding claims in which the second signal combining means comprises a first adder (19) for combining the output signal from the first signal combining means (15, 24) and the said correction signal, and a second adder (21) for combining the main signal and an output signal from the first adder (19).

6. A variable group delay equalizer according to any one of the preceding claims in which the amplitude altering means comprises at least two variable signal attenuation means (18, 18', 20) which are interposed one in a signal path affecting the amplitude of the output signal from the first signal combining means (15, 24) and the other in a signal path affecting the amplitude of the said correction signal but not affecting the amplitude of the output signal from the said first signal combining means, which two signal attenuation means are ganged with each other.

7. A variable group delay equalizer according to claim 5 in which the amplitude altering means comprises a first variable signal attenuation means (18) interposed between the correction signal producing means (13) and the first adder (19), and a second variable signal attenuation means (20) interposed between the first adder (19) and the second adder (21) and ganged with said first variable signal attenuation means (18).

8. A variable group delay equalizer according to claim 5 in which the amplitude altering means includes a first variable signal attenuation means (20) interposed between the first signal combining means (15) and the first adder (19), and a second variable signal attenuation means (18') interposed between the correcting signal producing means (13) and the first adder (19) and ganged with said first variable signal attenuation means (20), the coefficient of the second variable signal attenuation means being a multiple of the square (double on a log scale) of the coefficient of said first variable signal attenuation means.

9. A variable group delay equalizer according to claim 8 or claim 9 in which the second polarity inverting means is included in the second variable signal attenuation means.

10. A variable group delay equalizer according to claim 5 in which the amplitude altering means comprises a plurality of variable signal attenuation means interposed in the respective paths of said first to fourth signals and being ganged with each other.

11. A variable group delay equalizer according to any one of the preceding claims in which the said signal input is distributed into the said main and first to fourth signals by a plurality of branch circuits (2) connected together in a cascade manner whereby a branch circuit receives an input from the preceding branch circuit and provides an output to the succeeding branch circuit and an output to provide one of the said main and first to fourth signals a delay circuit (3) being interposed between successive said branch circuits.

12. A variable group delay equalizer according to any one of claims 1 to 10 in which the said signal input is distributed into the said main and first to fourth signals by a hierarchical arrangement of signal

# 0 079 204

dividers (208), the first and second signals being provided by the outputs of a common signal divider and the third and fourth signals being provided by the outputs of another common signal divider.

13. A variable group delay equalizer according to any one of the preceding claims in which the said signal input is distributed into a plurality of pairs of further signals, the members of each said pair having respectively a time lead and a time lag of a common amount relative to the absolute delay applied to the main signal and being recombined in the output signal at a common amplitude, each said pair of further signals being either combined by the said correction signal producing means or combined with a mutual phase inversion by the said first combining means.

14. An equalizer circuit for use in a transmitting apparatus and/or a receiving apparatus to an amplitude distortion and group delay distortion caused in a transmit/receive system, and which further comprises

a variable amplitude equalizer (VAE) being able to vary an amplitude frequency response characteristic in a continuous manner without substantially varying a group delay frequency characteristic, and

a variable group delay equalizer (VDE) according to claim 1 connected to said variable amplitude equalizer (VAE) in a cascade manner and being able to vary the group delay frequency characteristic in a continuous manner without substantially varying the amplitude frequency response characteristic.

15. An equalizer comprising:

a signal inputting portion (201),

signal distributor means (207, 207') for distributing an input signal applied to said signal inputting portion into a predetermined plurality of signals,

a plurality of branch signal line means receiving on the respective input sides a signal distributed by said signal distributor means (207),

delay means (203) interposed in at least one of said branch signal line means and having a predetermined delay time,

attenuation setting circuit means (204) interposed in at least one of said branch signal line means and having a predetermined attenuation coefficient, and

adder means (205) for adding a signal obtained on the respective output side of said branch signal line means, characterised in that the said signal distributor means comprises a hierarchieal arrangements of signal dividers (208), and at least some of the said plurality of signals being in pairs which are provided by the outputs of signal dividers each being common to a respective said pair.

16. An equalizer according to claim 15 in which the attenuation setting circuit means includes polarity inverting means.

17. An equalizer according to claim 15 or claim 16 in which the attenuation setting circuit means includes variable attenuation setting circuit means for varying the amount of attenuation.

## Patentansprüche

1. Variabler Gruppenlaufzeitentzerrer, in dem ein Eingangssignal auf mindestens ein Hauptsignal und ein erstes bis viertes Signal, die schließlich in einem Ausgangssignal vereinigt werden, verteilt wird, wobei die Signale einem Muster von Verzögerungen unterworfen werden, wodurch das erste und zweite Signal relativ zu der auf das Hauptsignal angewandten absoluten Verzögerung eine Vorlaufszeit bzw. eine Verzögerungszeit von einer ersten vorbestimmten Zeitdauer haben und das dritte und vierte Signal eine Voirlaufszeit bzw. eine Verzögerungszeit von einer zweiten vorbestimmten Zeitdauer haben, wenn sie zu dem Ausgangssignal vereinigt sind, mit:

einer ersten Signalvereinigungseinrichtung (15, 24) zum Vereinigen des ersten und zweiten Signales;

einer Korrektursignalerzeugungseinrichtung (13) zum Vereinigen des zweiten und dritten Signales und Benutzen der Vereinigung zur Ausgabe eines Korrektursignales;

einer zweiten Signalvereinigungseinrichtung (19, 21) zum Vereinigen des Hauptsignales, des Korrektursignales und der Ausgabe der ersten Signalvereinigungseinrichtung;

einer Signalamplitudenveränderungseinrichtung (18, 20) zum Verändern der Amplitude des ersten bis vierten Signales, wobei die Amplitude des ersten und zweiten Signales in dem vereinigten Ausgangssignal jedem anderen gleich ist und die Amplitude des dritten und vierten in dem vereinigten Ausgangssignal jedem anderen gleich ist; und

einer ersten Polaritätsinvertierungseinrichtung (14), durch die die Phasen des ersten und zweiten Signales im Verhältnis zueinander in dem vereinigten Ausgangssignal invertiert werden, dadurch gekennzeichnet, daß die erste vorbestimmte Zeitdauer und die zweite vorbestimmte Zeitdauer verschieden sind, die Signalamplitudenveränderungseinrichtung so variabel ist, daß die Amplituden des ersten bis vierten Signales verändert werden können, vorausgesetzt, daß ein konstantes Verhältnis zwischen dem log der Amplitude des Ausgangs der ersten Signalvereinigungseinrichtung und dem log der Amplitude des Korrektursignales aufrecht erhalten wird, und der Entzerrer eine zweite Polaritätsinvertierungseinrichtung aufweist, wodurch die Polarität eines teilweise vereinigten Signales, welches das erste und zweite Signal enthält, invertiert werden kann.

2. Variabler Gruppenlaufzeitentzerrer nach Anspruch 1, in dem die Korrektursignalerzeugungseinrichtung aufweist:

eine weitere Signalvereinigungseinrichtung (16, 25) zum Vereinen des dritten und vierten Signales und

11

eine feste Dämpfungseinrichtung (17) dum Dämpfen eines Ausgangssignales von der weiteren Signalvereinigungseinrichtung um einen vorbestimmten Betrag.

3. Variabler Gruppenlaufzeitentzerrer nach Anspruch 1 oder 2, in dem die zweite vorbestimmte Zeitdauer zweimal die erste vorbestimmte Zeitdauer ist.

4. Variabler Gruppenlaufzeitentzerrer nach einem der Ansprüche 1 bis 3, in dem die Signalamplitudenveränderungseinrichtung zum Verändern der Amplitude des Korrektursignales um das Quadrat des Betrages tätig wird, um den sie zum Verändern des Ausganges der ersten Signalvereinigungseinrichtung tätig wird.

5. Variabler Gruppenlaufzeitentzerrer nach einem der vorhergehenden Ansprüche, in dem die zweite Signalvereinigungseinrichtung einen ersten Addierer (19) zum Vereinigen des Ausgangssignales von der ersten Signalvereinigungseinrichtung (15, 24) und des Korrektursignales und einen zweiten Addierer (21) zum Vereinigen des Hauptsignales und des Ausgangssignales des ersten Addierers (19) aufweist.

6. Variabler Gruppenlaufzeitentzerrer nach einem der vorhergehenden Ansprüche, in dem die Amplitudenveränderungseinrichtung mindestens zwei variable Signaldämpfungseinrichtungen (18, 18', 20) aufweist, von denen die eine in einem Signalweg angeordnet ist, wobei die Amplitude des Ausgangssignales der ersten Signalvereinigungseinrichtung (15, 24) beeinflußt wird, und die andere in einem Signalweg, wobei die Amplitude des Korrektursignales beeinflußt wird aber nicht die Amplitude des Ausgangssignales der ersten Signalvereinigungseinrichtung beeinflußt wird, und die zwei Signaldämpfungseinrichtungen im Gleichlauf miteinander sind.

7. Variabler Gruppenlaufzeitentzerrer nach Anspruch 5, in dem die Amplitudenveränderungseinrichtung eine zwischen der Korrektursignalerzeugungseinrichtung (13) und dem ersten Addierer (19) angeordnete erste variable Signaldämpfungeinrichtung (18) und eine zweite zwischen dem ersten Addierer (19) und dem zweiten Addierer (21) angeordnete zweite variable Signaldämpfungseinrichtung (20) aufweist, die mit der ersten variablen Signaldämpfungseinrichtung (18) im Gleichlauf ist.

8. Variabler Gruppenlaufzeitentzerrer nach Anspruch 5, in dem die Amplitudenveränderungseinrichtung eine zwischen der ersten Signalvereinigungseinrichtung (15) und dem ersten Addierer (19) angeordnete variable Signaldämpfungseinrichtung (20) und eine zwischen der Korrektursignalerzeugungseinrichtung (13) und dem ersten Addierer (19) angeordnete zweite variable Signaldämpfungseinrichtung (18') aufweist, die mit der ersten variablen Signaldämpfungseinrichtung (20) im Gleichlauf ist, wobei der Koeffizient der zweiten variablen Signaldämpfungseinrichtung ein Vielfaches des Quadrates (Doppelte auf einer logarithmischen Skala) des Koeffizienten der ersten variablen Signaldämpfungseinrichtung ist.

9. Variabler Gruppenlaufzeitentzerrer nach Anspruch 8 oder 9, in dem die zweite Polaritätsinvertierungseinrichtung in der zweiten variablen Signaldämpfungseinrichtung eingeschlossen ist.

10. Variabler Gruppenlaufzeitentzerrer nach Anspruch 5, in dem die Amplitudenveränderungseinrichtung eine Mehrzahl von variablen Signaldämpfungseinrichtungen aufweist, die in den entsprechenden Wegen des ersten bis vierten Signales angeordnet und im Gleichlauf miteinander sind.

11. Variabler Gruppenlaufzeitentzerrer nach einem der vorhergehenden Ansprüche, in dem der Signaleingang auf das Haupt- und erste bis vierte Signal durch eine Mehrzahl von Verzweigungsleitungen (2) aufgeteilt wird, die in einer kaskadenartigen Weise miteinander verbunden sind, wodurch eine Verzweigungsleitung einen Eingang von der vorhergehenden Verzweigungsleitung erhält und einen Ausgang zu der folgenden Verzweigungsleitung vorsieht und einen Ausgang zum Vorsehen eines der Haupt- und ersten bis vierten Signale mit einer Verzögerungsschaltung (3), die zwischen aufeinanderfolgende Verzweigungsleitungen angeordnet ist.

12. Variabler Gruppenlaufzeitentzerrer nach einem der Ansprüche 1 bis 10, in dem der Signaleingang auf das Haupt- und erste bis vierte Signal durch eine hierarchische Anordnung von Signal, teilern (208) verteilt wird, wobei das erste und zweite Signal von den Ausgängen eines gemeinsamen Signalteilers und das dritte und vierte Signal von den Ausgängen eines anderern gemeinsamen Signalteilers vorgesehen werden.

13. Variabler Gruppenlaufzeitentzerrer nach einem der vorhergehenden Ansprüche, in dem der signaleingang auf eine Mehrzahl von Paaren von weiteren Signalen verteilt wird, wobei die Mitglieder von jedem Paar relativ zu der auf das Hauptsignal angewandten absoluten Verzögerung eine Vorlaufszeit bzw. eine Verzögerungszeit von einem gemeinsamen Betrag haben und in dem Ausgangssignal bei einer gemeinsamen Amplitude vereinigt sind, und jedes Paar von weiteren Signalen entweder durch die Korrektursignalerzeugungseinrichtung oder mit einer gegenseitigen Phaseninvertierung durch die erste Vereinigungseinrichtung vereinigt wird.

14. Entzerrkreis zur Benutzung in einer Übertragungsanlage und/oder in einer Empfangsanlage bei einer Amplitudenverzerrung und einer Gruppenlaufzeitverzerrung, die in einer Übertragung-/Empfangssystem verursacht werden, mit:

einem variablen Amplitudenentzerrer (VAE), der in der Lage ist, eine Amplituden-Frequenz-Abhängigkeitscharakteristik in kontinuierlicher Weise zu variieren, ohne im wesentlichen eine Gruppenlaufzeit-Frequenz-Charakteristik zu variieren, und

einem variablen Gruppenlaufzeitentzerrer (VDE) nach Anspruch 1, der mit dem variablen Amplitudenentzerrer (VAE) in einer Kaskadenart verbunden ist und in der Lage ist, die Gruppenlaufzeit-Frequenz-Charakteristik in einer kontinuierlichen Weise zu variieren, ohne im wesentlichen die Amplituden-Frequenz-Abhängigkeitscharakteristik zu variieren.

15. Entzerrer mit:

einem Signaleingabebereich (201),

Signalverteilereinrichtung (207, 207') zum Verteilen eines an den Signaleingabebereich angelegtes Eingangssignal auf eine vorbestimmte Mehrzahl von Signalen,

einer Mehrzahl von Verzweigungssignalleitungseinrichtungen, die auf der jeweiligen Eingangsseite ein von der Signalverteilereinrichtung (207) verteiltes Signal aufnehmen,

einer in wenigstens einer Verzweigungssignalleitungseinrichtungen angeordneten Verzögerungseinrichtung (203) mit einer vorbestimmten Verzögerungszeit,

einer in wenigstens einer der Verzweigungssignalleitungseinrichtungen angeordneten Dämpfungseinstellkreiseinrichtung (204) mit einem vorbestimmten Dämpfungskoeffizienten und

einer Addiereinrichtung (205) zum Addieren eines auf der entsprechenden Ausgangsseite der Verzweigungssignalleitungseinrichtung erhaltenen Signales, dadurch gekennzeichnet, daß die Signalverteilungseinrichtung eine hierarchische Anordnung von Signalteilern (208) aufweist und wenigstens einige der Mehrzahl von Signalen in Paaren sind, die von den Ausgängen von Signalteiler vorgesehen werden, wobei jeder gemeinsam für ein entsprechendes Paar vorhanden ist.

16. Entzerrer nach Anspruch 15, in dem die Dämpfungseinstellkreiseinrichtung eine Polaritätsinvertierungseinrichtung aufweist.

17. Entzerrer nach Anspruch 15 oder 16, in dem die Dämpfungseinstellkreiseinrichtung eine variable Dämpfungseinstellkreiseinrichtung zum Variieren des Betrages der Dämpfung aufweist.

## Revendications

1. Un égaliseur de retard de groupe variable, dans lequel un signal d'entrée est réparti pour donner au moins un signal principal et des premier à quatrième signaux qui sont finalement recombinés en un signal de sortie, ces signaux étant soumis à une configuration de retards sous l'effet de laquelle, par rapport au retard absolu qui est appliqué au signal principal, les premier et second signaux présentent respectivement une avance et un retard d'une première durée prédéterminée, et les troisième et quatrième signaux présentent respectivement une avance et un retard d'une seconde durée prédéterminée, lorsqu'ils sont recombinés dans le signal de sortie, l'égaliseur comportant:

des premiers moyens de combinaison de signal (15, 24) destinés à combiner les premier et second signaux;

des moyens de génération de signal de correction (13) destinés à combiner les second et troisième signaux, et utilisant la combinaison pour présenter en sortie un signal de correction;

des seconds moyens de combinaison de signal (19, 21) destinés à combiner le signal principal, le signal de correction et le signal de sortie des premiers moyens de combinaison de signal;

des moyens de modification d'amplitude de signal (18, 20) destinés à modifier l'amplitude des premier à quatrième signaux, les premier et second signaux ayant la même amplitude dans le signal de sortie recombiné, et les troisième et quatrième signaux ayant la même amplitude dans le signal de sortie recombiné; et

des premiers moyens d'inversion de polarité (14) grâce auxquels les premier et second signaux ont des phases mutuellement inversées dans le signal de sortie recombiné caractérisé en ce que la première durée prédéterminée et la seconde durée prédéterminée sont différentes, les moyens de modification d'amplitude de signal sont variables, de façon à permettre de faire varier les amplitudes des premier à quatrième signaux, à condition de maintenir un rapport constant entre le logarithme de l'amplitude du signal de sortie des premiers moyens de combinaison de signal et le logarithme de l'amplitude du signal de correction, et l'égaliseur comportant des seconds moyens d'inversion de polarité grâce auxquels on peut inverser la polarité d'un signal partiellement recombiné qui est formé par les premier et second signaux.

2. Un égaliseur de retard de groupe variable selon la revendication 1, dans lequel les moyens de génération de signal de correction comprennent des moyens de combinaison de signal supplémentaires (16, 25) destinés à combiner les troisième et quatrième signaux, et des moyens atténuateurs fixes (17) destinés à atténuer d'une valuer prédéterminée un signal de sortie des moyens de combinaison de signal supplémentaires.

3. Un égaliseur de retard de groupe variable selon la revendication 1 ou la revendication 2, dans lequel la seconde durée prédéterminée est égale à deux fois la première durée prédéterminée.

4. Un égaliseur de retard de groupe variable selon l'une quelconque des revendications 1 à 3, dans lequel les moyens de modification d'amplitude de signal ont pour action de modifier l'amplitude du signal de correction par un facteur égal au carré de la valeur par laquelle ils modifient le signal de sortie des premiers moyens de combinaison de signal.

5. Un égaliseur de retard de groupe variable selon l'une quelconque des revendications précédentes, dans lequel les seconds moyens de combinaison de signal comprennent un premier additionneur (19) destiné à combiner le signal de sortie des premiers moyens de combinaison de signal (15, 24) et le signal de correction, et un second additionneur (21) destiné à combiner le signal principal et le signal de sortie du premier additionneur (19).

6. Un égaliseur de retard de groupe variable selon l'une quelconque des revendications précédentes, dans lequel les moyens de modification d'amplitude comprennent au moins deux moyens d'atténuation de

13

signal variables (18, 18', 20) qui sont intercalés l'un dans une voie de signal affectant l'amplitude du signal de sortie des premiers moyens de combinaison de signal (15, 24), et l'autre dans une voie de signal affectant l'amplitude du signal de correction, mais n'affectant pas l'amplitude du signal de sortie des premiers moyens de combinaison de signal, et ces deux moyens d'atténuation de signal sont mutuellement couplés.

7. Un égaliseur de retard de groupe variable selon la revendication 5, dans lequel les moyens de modification d'amplitude comprennent des premiers moyens d'atténuation de signal variable (18) intercalés entre les moyens de génération de signal de correction (13) et le premier additionneur (19), et des seconds moyens d'atténuation de signal variables (20) intercalés entre le premier additionneur (19) et le second additionneur (20), et couplés aux premiers moyens d'atténuation de signal variables (18).

8. Un égaliseur de retard de groupe variable selon la revendication 5, dans lequel les moyens de modification d'amplitude comprennent des premiers moyens d'atténuation de signal variables (20) intercalés entre les premiers moyens de combinaison de signal (15) et le premier additionneur (19), et des seconds moyens d'atténuation de signal variables (18'), intercalés entre les moyens de génération de signal de correction (13) et le premier additionneur (19) et couplés aux premiers moyens d'atténuation de signal variable (20), le coefficient des seconds moyens d'atténuation de signal variables étant un multiple du carré (ou du double avec une échelle logarithmique) du coefficient des premiers moyens d'atténuation de signal variables.

9. Un égaliseur de retard de groupe variable selon la revendication 8 ou la revendication 9, dans lequel les seconds moyens d'inversion de polarité sont incorporés dans les seconds moyens d'atténuation de signal variables.

10. Un égaliseur de retard de groupe variable selon la revendication 5, dans lequel les moyens de modification d'amplitude comprennent un ensemble de moyens d'atténuation de signal variables qui sont intercalés dans les voies respectives des premier à quatrième signaux et qui sont mutuellement couplés.

11. Un égaliseur de retard de groupe variable selon l'une quelconque des revendications précédentes, dans lequel le signal d'entrée est réparti pour donner le signal principal et les premier à quatrième signaux, par un ensemble de circuits de dérivation (2) connectés ensemble en cascade, de façon qu'un circuit de dérivation reçoive un signal d'entrée provenant d'un circuit de dérivation précédent et fournisse un signal de sortie dirigé vers le circuit de dérivation suivant, et un signal de sortie constituant l'un des signaux parmi le signal principal et les premier à quatrième signaux, tandis qu'un circuit de retard (3) est intercalé entre des circuits de dérivation successifs.

12. Un égaliseur de retard de groupe variable selon l'une quelconque des revendications 1 à 10, dans lequel le signal d'entrée est réparti pour donner le signal principal et les premier à quatrième signaux, par une structure hiérarchisée des diviseurs de signal (208), les premier et second signaux étant fournis par les sorties d'un diviseur de signal commun et les troisième et quatrième signaux étant fournis par les sorties d'un autre diviseur de signal commun.

13. Un égaliseur de retard de groupe variable selon l'une quelconque des revendications précédentes, dans lequel le signal d'entrée est réparti en un ensemble de paires de signaux supplémentaires, les membres de chaque paire présentant respectivement une avance et un retard d'une durée commune, par rapport au retard absolu qui est appliqué au signal principal, et étant recombinés dans le signal de sortie avec une amplitude commune, chacune de ces paires de signaux supplémentaires étant soit combinée par les moyens de génération de signal de correction, soit combinée avec une inversion de phase mutuelle par les premiers moyens de combinaison.

14. Un circuit égaliseur prévu pour l'utilisation dans un équipement d'émission et/ou de réception pour corriger une distorsion d'amplitude et une distorsion de retard de groupe qui apparaissent dans un système d'émission/réception, et qui comprend en outre

un égaliseur d'amplitude variable (VAE) qui est capable de faire varier de manière continue une caractéristique de réponse amplitude/fréquence, sans modifier notablement un caractéristique de retard de groupe/fréquence, et

un égaliseur de retard de groupe variable (VDE) conforme à la revendication 1, connecté en cascade à l'égaliseur d'amplitude variable (VAE) et qui est capable de faire varier de manière continue la caractéristique retard de groupe/fréquence, sans modifier notablement la caractéristique de réponse amplitude/fréquence.

15. Un égaliseur comprenant:

une partie d'entrée de signal (201),

des moyens de répartition de signal (207, 207') destinés à répartir en un ensemble de signaux prédéterminés un signal d'entrée qui est appliqué à la partie d'entrée de signal,

un ensemble de lignes de signal de dérivation recevant sur leurs côtés d'entrée respectifs un signal réparti par les moyens de répartition de signal (207),

des moyens de retard (203) intercalés dans l'une au moins des lignes de signal de dérivation, et ayant une durée de retard prédéterminée,

un circuit de réglage d'atténuation (204) intercalé dans l'une au moins des lignes de signal de dérivation et ayant un coefficient d'atténuation prédéterminé,

des moyens additionneurs destinés à additionner des signaux obtenus sur les côtés de sortie respectifs des lignes de signal de dérivation caractérisé en ce que les moyens de répartition de signal comprennent

14

une structure hiérarchisée de diviseurs de signal (208), et certains au moins des signaux de l'ensemble de signaux sont associés en paires qui sont fournies par les sorties des diviseurs de signaux, chacun d'eux étant commun à une paire respective de signaux.

16. Un égaliseur selon la revendication 15, dans lequel le circuit de réglage d'atténuation comprend des moyens d'inversion de polarité.

17. Un égaliseur selon la revendication 15 ou la revendication 16, dans lequel le circuit de réglage d'atténuation comprend un circuit de réglage d'atténuation variable permettant de faire varier la valeur d'atténuation.

FIG.1    PRIOR ART

FIG.2

PRIOR ART

FIG.3    PRIOR ART

1

FIG. 4

PRIOR ART

ME

FIG. 5  PRIOR ART

VAE

2

FIG. 6    PRIOR ART

FIG. 7

FIG. 8

3

FIG. 9

FIG. 10

FIG. 11

OUTPUT VOLTAGE
PHASE

180

90

O

-Ve          O          +Ve

FIG. 12

301
2 T

12                    V D E

7
302
3 T                    15              19          21    102

102'
DISTRI-
BUTOR          303          14
T          POLARITY
INVERTER                    L
20

16    17
L
18

4 T
304

13

5

FIG. 13

FIG. 14

FIG. 15

FIG. 16

FIG. 17

FIG. 18

FDE

F I G. 19

FDE

F I G. 20

FAE